# Europäisches Patentamt
# European Patent Office
# Office européen des brevets

(19)

(11) Veröffentlichungsnummer: **0 341 499 B1**

(12)
# EUROPÄISCHE PATENTSCHRIFT

(45) Veröffentlichungstag der Patentschrift: **14.12.94**

(21) Anmeldenummer: **89107612.7**

(22) Anmeldetag: **27.04.89**

Die Akte enthält technische Angaben, die nach dem Eingang der Anmeldung eingereicht wurden und die nicht in dieser Patentschrift enthalten sind.

(51) Int. Cl.5: **C08F 210/02**, C08F 218/08, C08F 2/00, //(C08F210/02, 218:08),(C08F218/08,210:02)

(54) **Lösungspolymerisation zur Herstellung von gelfreien Ethylen/Vinylacetat-Copolymerisaten.**

(30) Priorität: **10.05.88 DE 3815946**

(43) Veröffentlichungstag der Anmeldung:
**15.11.89 Patentblatt 89/46**

(45) Bekanntmachung des Hinweises auf die Patenterteilung:
**14.12.94 Patentblatt 94/50**

(84) Benannte Vertragsstaaten:
**DE FR GB**

(56) Entgegenhaltungen:
**DE-A- 1 570 344
DE-A- 3 323 531
FR-A- 1 238 589
US-A- 3 997 624
US-A- 4 649 186**

(73) Patentinhaber: **BAYER AG**

**D-51368 Leverkusen (DE)**

(72) Erfinder: **Wolf, Bernhard, A., Prof. Dr.
Fontanestrasse 84
D-6500 Mainz 31 (DE)**
Erfinder: **Will, Bernhard, Dipl.-Phys.**

**Bingertstrasse 76
D-6200 Wiesbaden (DE)**
Erfinder: **Obrecht, Werner, Dr.
Holderbergerstrasse 108
D-4130 Moers 2 (DE)**
Erfinder: **Casper, Rudolf, Prof. Dr.
St. Ingberter-Strasse 3
D-5090 Leverkusen (DE)**
Erfinder: **Baade, Wolfgang, Dr.
Kölner Strasse 122
D-4047 Dormagen (DE)**
Erfinder: **Sylvester, Gerd, Dr.
An der Steinrütsch 5a
D-5090 Leverkusen (DE)**
Erfinder: **Meurer, Kurt-Peter, Dr.
Am Krahfeld 1
D-5330 Königswinter 21 (DE)**
Erfinder: **Zimmermann, Hugo, Dr.
Stuettgerhofweg 7
D-5000 Köln 40 (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft ein diskontinuierliches bzw. vorzugsweise ein kontinuierliches Verfahren zur Herstellung von Ethylen/Vinylacetat (EVA)-Copolymerisaten durch radikalische Copolymerisation der Monomeren in tert.-Butanol unter speziellen Druck- und Temperaturbedingungen, welche die Herstellung gelfreier Produkte erlauben.

EVA-Copolymerisate lassen sich in nahezu beliebiger statistischer Zusammensetzung durch radikalische Copolymerisation der Monomeren herstellen.

Ethylen-Vinylacetat-Copolymerisate [s. H. Bucka, R. Nitzsche, H. Onderka, Plaste und Kautschuk 30, (6), 302-305 (1983)] mit niedrigem Gehalt an copolymerisiertem Vinylacetat (nachfolgend: "Vinylacetatgehalt" oder "VA-Gehalt") Vinylacetatgehalt lassen sich durch Hoch druckpolymerisation wirtschaftlich herstellen. Nach dem klassischen Masse-Hochdruckpolymerisations-Verfahren kann man Copolymerisate mit einem Vinylacetatgehalt bis zu maximal 50 Gew.-% besonders wirtschaftlich und mit günstigen Eigenschaften herstellen. Die Polymerisation erfolgt im allgemeinen bei Drucken von 1.000 bis 2.500 bar und bei Temperaturen von 150 bis 280°C. Zur Herstellung von EVA-Copolymerisaten mit höheren VA-Gehalten eignet sich das Hochdruckverfahren jedoch nicht, da es schwierig ist, bei den dort notwendigen Polymerisationstemperaturen Copolymerisate mit hohem Molekulargewicht und hoher Mooney-Viskosität zu erhalten.

EVA-Copolymerisate mit VA-Gehalten von mehr als 70 Gew.-% werden überwiegend durch Emulsionspolymerisation hergestellt. Gerade bei diesem Verfahren werden jedoch Produkte mit sehr hohem Gelgehalt erhalten, die aufgrund schlechter Verarbeitbarkeit als elastomere Festkautschuke unbrauchbar sind. Zwar wird in der DE-OS 3 000 009 ein Verfahren zur Herstellung von elastomeren Ethylen/Vinylacetat-Copolymerisaten mit hoher Mooney-Viskosität und niedrigem Gelgehalt beschrieben. Es handelt sich um Emulsionscopolymerisate mit einem Gehalt an copolymerisiertem Vinylacetat von 40 bis 70 Gew.-%, die aus wäßrigen Lösungen durch Koagulation eines Ethylen/Vinylacetat-Copolymerisat-Latex gewonnen werden. Die Eigenschaften dieser Ethylen/Vinylacetat-Copolymerisate werden durch nicht vollständig abtrennbare Emulgatorreste bestimmt und machen die Copolymerisate für eine Reihe von Anwendungen unbrauchbar.

EVA-Copolymerisate mit einem VA-Gehalt von mindestens 30 Gew.-% können auch nach einem Lösungspolymerisations-Verfahren bei mittleren Drucken hergestellt werden. Als Lösungsmittel verwendet man beispielsweise tert.-Butanol oder Gemische aus tert.-Butanol, Methanol und Kohlenwasserstoffen, in denen die Polymerisate auch während des Polymerisationsprozesses in Lösung bleiben (DE-AS 11 26 613, 11 26 614 und 14 95 767, DE-OS 33 23 531, GB-A- 807 112 und 843 974, FR-A- 1 189 387, 1 225 704 und 1 238 589, US-A- 2 396 785 und 2 947 735). Nach diesem Verfahren entstehen hochmolekulare, schwach verzweigte Copolymerisate.

Das Lösungs-Polymerisationsverfahren wird in der Regel in einer Kaskade von drei bis zehn Reaktoren in tert.-Butanol als Lösungsmittel bei Temperaturen von 50 bis 130°C und einem Druck von 50 bis 400 bar in Anwesenheit radikalbildender Substanzen, wie organischen Peroxiden oder Azoverbindungen, als Polymerisationsinitiatoren durchgeführt. Dabei entstehen hochmolekulare, gelarme, elastomere Copolymerisate mit VA-Gehalten von 30 bis 75 Gew.-%. Der bisher nicht vermeidbare Gelgehalt wirkt sich störend auf die Eigenschaften der hergestellten Copolymerisate und der daraus erhältlichen Vulkanisate aus. Visuell sind unerwünschte Gelanteile als Stippen zu erkennen.

Überraschenderweise wurde nun gefunden, daß sich durch Lösungspolymerisation unter ausgewählten Druck- und Temperaturbedingungen gel- und damit stippenfreie hochmolekulare EVA-Copolymerisate herstellen lassen.

Gegenstand der Erfindung ist ein Verfahren zur Herstellung von gelfreien Ethylen/Vinylacetat-Copolymerisaten mit VA-Gehalten von 30 bis 70 Gew.-%, vorzugsweise von 40 bis 70 Gew.-%, durch Lösungspolymerisation von Ethylen und Vinylacetat in tert.-Butanol bei Temperaturen von 30 bis 120°C, vorzugsweise von 50 bis 90°C, und Drucken von 99,6 bis 1.000 bar, wobei man während der Polymerisation mindestens zeitweise, vorzugsweise im Umsatzbereich von 3 bis 20 % (bezogen auf eingesetztes Vinylacetat), einen Mindestdruck entsprechend der Formel

$$p = 1.1 \left[ -204.2 + 9.12 \cdot [E] \quad -48 \; [E] \; / \; [VA] \; + \right.$$

$$\left. + 44 \left[ \frac{[E]}{[VA]} \right]^2 + 1.12 \cdot T \right] \; bar$$

aufrechterhält, wobei

[E]        den Gehalt an copolymerisiertem Ethylen im Endprodukt in Gew.-%,

[VA]      den VA-Gehalt im Endprodukt in Gew.-% und

T         die Polymerisationstemperatur in [°C]

bedeuten.

Der Druck von p oder mehr sollte praktischerweise wenigstens über den gesamten Umsatzbereich von 3 bis 20 % aufrechterhalten werden. Wie schon die obige Formel zeigt, hängt der Mindestdruck p vom VA-Gehalt des herzustellenden Copolymerisats ab: So ist es beispielsweise ausreichend, den Mindestdruck p bei Copolymerisaten mit VA-Gehalten von 45 bis 70 Gew.-%. im Umsatzbereich von 3 bis 12 % und bei Copolymerisaten mit VA-Gehalten von 30 bis weniger als 45 Gew.-% im Umsatzbereich von 8 bis 20 % aufrechtzuerhalten. Mit höherem Umsatz kann der Mindestdruck dann etwas reduziert werden, wobei das zulässige Maß im Einzelfall - falls man dies wünscht - experimentell leicht ermittelt werden kann: Sobald der Gelgehalt der erhaltenen Copolymerisate steigt, hat man den notwendigen Mindestdruck unterschritten. Aus Gründen einer möglichst einfachen Verfahrensführung wird man den Druck jedoch im allgemeinen über den gesamten Umsatz konstant halten.

Das erfindungsgemäße Verfahren kann z. B. in Hochdruckrührautoclaven durchgeführt werden. Bei dem bevorzugten kontinuierlichen Verfahren arbeitet man in der Regel mit mindestens vier Reaktionsbehältern.

Die zu verwendende Menge tert.-Butanol beträgt 10 bis 300 Gew.-%, vorzugsweise 40 bis 200 Gew.-%, bezogen auf eingesetztes Vinylacetat.

Der Endumsatz beträgt üblicherweise 30 bis 90 %, vorzugsweise 35 bis 80 %, bezogen auf eingesetztes Vinylacetat.

Die Verweilzeit liegt üblicherweise zwischen 3 und 18 Stunden, wobei mit steigendem VA-Gehalt kürzere Verweilzeiten möglich sind. So beträgt die Verweilzeit für Typen mit hohem VA-Gehalt 3 bis 8, für Typen mit niedrigem VA-Gehalt 8 bis 18 Stunden.

Als Polymerisationsinitiatoren kann man Radikalbildner verwenden, die bei einer Temperatur von 65°C Zerfallshalbwertzeiten von 30 bis 220 Minuten besitzen. Bevorzugte Beispiele solcher Radikalbildner umfassen organische Peroxide, wie Benzoylperoxid, Lauroylperoxid, Dichlorbenzoylperoxid, und Azoverbindungen wie Azodiisobutyronitril, insbesondere aber Perester wie Alkylperpivalate, z. B. tert.-Butylperpivalat und tert.-Amylperpivalat, und Percarbonate wie Diisopropylperoxydicarbonat und Dicyclohexylperoxydicarbonat. Die Polymerisationsinitiatoren werden in der Regel in Mengen von 0,01 bis 1,5 Gew.-%, vorzugsweise 0,1 bis 1 Gew.-%, bezogen auf eingesetzte Monomere, eingesetzt.

Wegen der regelnden Wirkung des Vinylacetates und der Übertragungsreaktion durch das Lösungsmittel werden im allgemeinen keine Regler eingesetzt. In Ausnahmefällen werden jedoch zur Erzielung niedrigerer Molekulargewichte Regler verwendet. Hierfür kommen Ketone, wie Aceton, Diethylketon, Aldehyde, wie z.B. Propionaldehyd, oder Kohlenwasserstoffe, wie z.B. Propen oder Isooctan, in Mengen von 50-2000 ppm, vorzugsweise 100 bis 1000 ppm, bezogen auf eingesetzte Monomere, in Frage.

Die erfindungsgemäß hergestellten gelfreien Copolymerisate besitzen im allgemeinen Mooney-Viskositäten gemäß DIN 53 523 von 15 bis 40 ML (1 + 4) 100°C, als Gewichtsmittel bestimmte Molekulargewichte $\overline{M}_n$ von 150.000 bis 1.000.000, vorzugsweise von 200.000 bis 500.000 (bestimmt durch Lichtstreuung) und als Zahlenmittel bestimmte Molekulargewichte $\overline{M}_n$ von 15.000 bis 200.000, vorzugsweise von 22.000 bis 70.000 (membranosmometrisch bestimmt in Toluol). Der Dispersionsindex

3

$$\frac{\overline{M}_w}{\overline{M}_n}$$

liegt im allgemeinen bei 2 bis 15.

"Gelfrei" im Sinne der Erfindung bedeutet, daß nach 24-stündiger Extraktion mit Methylenchlorid im Soxhlet-Aufsatz nicht mehr als 0,2 Gew.-%, bezogen auf Copolymerisat, unlöslicher Rückstand verbleibt.

Die erfindungsgemäß hergestellten Copolymerisate können in nicht vulkanisiertem oder in vulkanisiertem Zustand verwendet werden. Bevorzugte Beispiele für die Verwendung in nicht vulkanisiertem Zustand sind die Verwendung als Fließverbesserer für Schmiermittel und Hydrauliköle (wie z.B. Mitteldestillate nach DIN 7728 T1), als Klebstoffbindemittel, insbesondere für Schmelzkleber, und als (weichmachende) Mischungskomponente für Thermoplaste und Duroplaste. Die verwendeten Mengen hängen vom Einsatzzweck ab: So können Fließverbesserer in Mengen ab 1 Gew.-% und Schmelzkleber bis zu 100 Gew.-% der erfindungsgemäß hergestellten Copolymerisate enthalten.

Geeignete Thermoplaste und Duroplaste umfassen z.B. PVC, Polymethylmethacrylat, Styrolcopolymerisate einschließlich ABS, Acrylnitrilcopolymerisate, Polyvinylidenchlorid, Polyester einschließlich Polycarbonate, Polyamide, Polyvinylacetate, Polyphenylensulfid, Polyethylen und thermoplastische Polyester wie Polyalkylenterephthalate; ungesättigte Polyesterharze, Phenol/Formaldehyd- und Amin/Formaldehyd-Kondensate.

Für die meisten Anwendungen setzt man die erfindungsgemäß hergestellten Copolymerisate in vulkanisierter Form ein. Die Vulkanisation erfolgt vorzugsweise durch Peroxide. "Vulkanisiert" im Sinne der Erfindung bedeutet, daß bei 10-stündiger Extraktion im Soxhlet-Aufsatz mit Toluol als Extraktionsmittel weniger als 5, vorzugsweise weniger als 2 Gew.-%, bezogen auf Copolymerisat, extrahierbar ist. Eine wichtige Verwendung vulkanisierter erfindungsgemäß hergestellter Copolymerisate ist die Verwendung als Mischungskomponente für andere Kautschuke, wie z.B. kautschukartige Homo- und Copolymerisate von Butadien, Isopren, Chloropren, Acrylnitril, Vinylacetat, Estern von Acryl- bzw. Methacrylsäure und $C_1$-$C_8$-Mono- bzw. Dialkoholen; Vinylchlorid, Ethylen.

Für diese Zwecke können die erfindungsgemäß hergestellten Copolymerisate in Mengen innerhalb weiter Grenzen, z.B. von 1 bis 99, vorzugsweise von 10 bis 90, insbesondere von 10 bis 40 und 60 bis 90, Gew.-%, bezogen auf Mischung, verwendet werden.

Man kann die bereits vulkanisierten Copolymerisate zusetzen, wird aber meist die Copolymerisate in nicht-vulkanisierter Form den nicht-vulkanisierten Kautschuken zusetzen und dann beide gemeinsam vulkanisieren.

Diese letzte Ausführungsform läßt sich auch auf die Mischung mit Thermoplasten, wie z.B. mit Ethylen/Vinylacetat-Copolymerisaten mit VA-Gehalten von 1 bis weniger als 30 Gew.-%, anwenden.

Diese vulkanisierten erfindungsgemäß hergestellten Copolymerisate können als solche oder in Form der oben beschriebenen Mischungen zur Herstellung von Formkörpern, Folien und Überzügen jeglicher Art verwendet werden, z.B. zur Herstellung von Kabelaußenmänteln, Kabelleitlagen, Isolierungen, Transportbändern, Kraftübertragungselementen und Schläuchen.

Die Prozentangaben der nachfolgenden Beispiele beziehen sich auf das Gewicht; Teile sind Gewichtsteile.

Beispiele

Beispiel 1

Eine aus sechs hintereinander geschalteten Hochdruckrührautoklaven mit 4 - 6 m$^3$ Fassungsvermögen bestehende Kaskade wird kontinuierlich mit 1.520 kg/h Ethylen sowie 1.150 kg/h Gemisch, bestehend aus 4 Teilen Vinylacetat und 6 Teilen tert.-Butanol, und 132 kg/h einer Lösung von 19,1 kg Dicyclohexylperoxydicarbonat in einem Gemisch aus 450 kg Vinylacetat und 850 kg tert.-Butanol gefüllt. Die Reaktorinnentemperaturen weisen ein Profil von 60 - 75 °C bei einem Druck von 720 bar auf. Das unverbrauchte Ethylen wird abgelassen. Man erhält ein gelfreies Copolymerisat mit folgenden Eigenschaften:

Umsatz: 68 %
VA-Gehalt: 31 %
$\overline{M}_w$: 223.000
$\overline{M}_n$: 28.000
22 ML (1 + 4) 100 °C

4

$T_1 = 60\,°C, T_2 = 65\,°C, T_3 = 68\,°C, T_4 = 72\,°C, T_5 = 72\,°C, T_6 = 75\,°C$

**Beispiel 2**

Beispiel 1 wird wiederholt mit dem Unterschied eines Profils der Reaktorinnentemperaturen $T_1$-$T_6$ von 60 - 78°C und einem Betriebsdruck von 550 bar. Die Kaskade wird dabei kontinuierlich mit 1.450 kg/h Ethylen, 1.928 kg/h eines Gemisches aus 36 Teilen Vinylacetat und 64 Teilen tert.-Butanol und 177 kg/h eines Gemisches aus 361 kg Vinylacetat, 641 kg tert.-Butanol und 7,4 kg tert.-Butylperpivalat gefüllt. Man erhält ein gelfreies Copolymerisat mit folgenden Eigenschaften:
Umsatz: 64 %
VA-Gehalt: 40 %
$\overline{M}_w$: 249.000
$\overline{M}_n$: 25.000
23 ML (1 + 4) 100°C
$T_1 = 60\,°C, T_2 = 65\,°C, T_3 = 68\,°C, T_4 = 72\,°C, T_5 = 75\,°C, T_6 = 78\,°C$

**Beispiel 3**

Beispiel 1 wird wiederholt mit dem Unterschied eines Profils der Reaktorinnentemperaturen $T_1$-$T_6$ von 55 - 70°C bei einem Druck von 500 bar, wobei die Kaskade kontinuierlich mit 1180 kg/h Ethylen, 1.928 kg/h eines Gemisches aus 36 Teilen Vinylacetat und 64 Teilen tert.-Butanol sowie 177 kg/h einer Lösung von 12,2 kg Dicyclohexylperoxydicarbonat in einem Gemisch aus 361 kg Vinylacetat und 641 kg tert.-Butanol gefüllt wird. Das erhaltene gelfreie Copolymerisat besitzt folgende Eigenschaften:
Umsatz: 75 %
VA-Gehalt: 45 %
$\overline{M}_w$: 320.000
$\overline{M}_n$: 35.000
25 ML (1 + 4) 100°C
$T_1 = 55\,°C, T_2 = 60\,°C, T_3 = 64\,°C, T_4 = 66\,°C, T_5 = 68\,°C, T_6 = 70\,°C$

**Beispiel 4**

Beispiel 1 wird wiederholt mit dem Unterschied von 5 hintereinander geschalteten Reaktoren und eines Profils der Reaktorinnentemperaturen $T_1$-$T_5$ von 55 - 70°C und einem Betriebsdruck von 400 bar, wobei die Kaskade kontinuierlich mit 1.140 kg/h Ethylen, 1.700 kg/h eines Gemisches aus gleichen Teilen tert.-Butanol und Vinylacetat sowie 122 kg/h Initiatorlösung, bestehend aus 410 kg Vinylacetat, 790 kg tert.-Butanol und 19,5 kg Dicyclohexylperoxydicarbonat gefüllt wird. Das erhaltene gelfreie Copolymerisat besitzt folgende Eigenschaften:
Umsatz: 78 %
VA-Gehalt: 50 %
$\overline{M}_w$: 244.000
$\overline{M}_n$: 28.000
25 ML (1 + 4) 100°C
$T_1 = 55\,°C, T_2 = 62\,°C, T_3 = 66\,°C, T_4 = 68\,°C, T_5 = 70\,°C$

**Beispiel 5**

Beispiel 1 wird wiederholt mit dem Unterschied von vier hintereinander geschalteten Reaktoren eines Profils der Reaktorinnentemperatur $T_1$-$T_4$ von 60 - 78°C und einem Betriebsdruck von 400 bar. Die Kaskade wird dabei kontinuierlich mit 900 kg/h Ethylen sowie 2.160 kg/h eines Gemisches aus gleichen Teilen Vinylacetat und tert.-Butanol und 131 kg/h einer Lösung von 11,7 kg tert.-Butylperpivalat in einem Gemisch aus 468 kg Vinylacetat und 832 kg tert.-Butanol gefüllt. Das erhaltene gelfreie Copolymerisat besitzt folgende Eigenschaften:
Umsatz: 74 %
VA-Gehalt: 59 %
$\overline{M}_w$: 300.000
$\overline{M}_n$: 32.000

5

26 ML (1 + 4) 100 °C

$T_1$ = 60 °C, $T_2$ = 66 °C, $T_3$ = 72 °C, $T_4$ = 78 °C

Die Produkte der obigen Beispiele werden in der nachfolgenden Tabelle mit unter herkömmlichen Bedingungen hergestellten EVA-Copolymerisaten verglichen.

| Bsp. | VA-Gehalt [Gew.-%] | [E]/[VA] | T [°C] | p [bar] | Gelgehalt [Gew.-%] | Mindestdrücke lt. Erfindung [bar] |
|---|---|---|---|---|---|---|
| 1 | 30 | 2,33 | 60-75 | 720 | < 0,2 | 691,9 – 710,4 |
| 2 | 40 | 1,5 | 60-78 | 550 | < 0,2 | 480,9 – 503,1 |
| 3 | 45 | 1,22 | 55-70 | 500 | < 0,2 | 406,7 – 425,2 |
| 4 | 50 | 1,0 | 55-70 | 400 | < 0,2 | 340,3 – 358,8 |
| 5 | 60 | 0,66 | 60-78 | 400 | < 0,2 | 236,9 – 259,2 |
| Vergl. | | | | | | |
| 1 | 30 | 2,33 | 80-95 | 300 | 2,7 | 716,5 – 735,0 |
| 2 | 40 | 1,5 | 75-90 | 250 | 3,2 | 499,4 – 517,9 |
| 3 | 45 | 1,22 | 65-80 | 300 | 1,9 | 419,0 – 437,5 |
| 4 | 50 | 1,0 | 70-90 | 250 | 1,7 | 358,8 – 383,5 |
| 5 | 60 | 0,66 | 65-80 | 200 | 1,2 | 243,1 – 261,6 |

**Patentansprüche**

1. Verfahren zur Herstellung von gelfreien Ethylen/Vinylacetat-Copolymerisaten mit VA-Gehalten von 30 bis 70 Gew.-% durch Lösungspolymerisation von Ethylen und Vinylacetat in tert.-Butanol bei Temperaturen von 30 bis 120°C und Drucken von 99,6 bis 1.000 bar, wobei man während der Polymerisation mindestens zeitweise einen Mindestdruck entsprechend der Formel

$$p = 1.1 \left[ -204.2 + 9.12 \cdot [E] - 48\,[E] / [VA] + 44 \left[ \frac{(E)}{(VA)} \right]^2 + 1.12 \cdot T \right] \text{ bar}$$

aufrechterhält, wobei
- [E] den Gehalt an copolymerisiertem Ethylen im Endprodukt in Gew.-%,
- [VA] den VA-Gehalt im Endprodukt in Gew.-% und
- T die Polymerisationstemperatur in [°C]

bedeuten.

2. Verfahren nach Anspruch 1 bei Temperaturen von 50 bis 90°C.

3. Verfahren nach Ansprüchen 1 und 2, wobei man den Mindestdruck gemäß Anspruch 1 im Umsatzbereich von 3 bis 20 % aufrechterhält.

4. Verwendung der nach Verfahren gemäß Ansprüchen 1 bis 3 erhältlichen Copolymerisate als Fließverbesserer, Klebstoffbindemittel und Mischungskomponente für Thermoplaste, Duroplaste und Kautschuke.

5. Verwendung der nach Verfahren gemäß Ansprüchen 1 bis 3 erhältlichen Copolymerisate zur Herstellung von Vulkanisaten.

**Claims**

1. Process for the manufacture of gel-free ethylene/vinyl acetate copolymers with VA contents of 30 to 70 wt% by solution polymerization of ethylene and vinyl acetate in tert-butanol at temperatures of 30 to 120 °C and pressures of 99.6 to 1000 bar, wherein a minimum pressure in accordance with the formula

$$p = 1.1 \left[ -204.2 + 9.12 \cdot [E] - 48\,[E] / [VA] + 44 \left[ \frac{(E)}{(VA)} \right]^2 + 1.12 \cdot T \right] \text{ bar}$$

where
[E] denotes the content of copolymerized ethylene in the end product in wt%,

[VA] denotes the VA content in the end product in wt% and
T denotes the polymerization temperature in °C
is maintained at least for a time during the polymerization.

2.  Process according to Claim 1 at temperatures of 50 to 90 °C.

3.  Process according to Claims 1 and 2, wherein the minimum pressure according to Claim 1 is maintained over the conversion range of from 3 to 20 %.

4.  Use of the copolymers obtainable by the process according to Claims 1 to 3 as flow improvers, adhesive binders and mixture components for thermoplastics, thermosets and rubbers.

5.  Use of the copolymers obtainable by the process according to Claims 1 to 3 for the manufacture of vulcanizates.

**Revendications**

1.  Procédé de préparation de copolymères éthylène/acétate de vinyle exempts de gel à des teneurs en acétate de vinyle copolymérisé de 30 à 70% en poids par polymérisation de l'éthylène et de l'acétate de vinyle en solution dans le tert-butanol à des températures de 30 à 120°C et des pressions de 99,6 à 1 000 bar dans lequel, durant la polymérisation, au moins dans certains intervalles, on maintient une pression minimale définie par la relation

$$p = 1.1 \left[ -204.2 + 9.12 \cdot [E] \quad -48 \ [E] \ / \ [VA] \ + \ 44 \left[ \frac{[E]}{[VA]} \right]^2 + 1.12 \cdot T \right] \ bar$$

dans laquelle
[E] est la teneur en éthylène copolymérisé dans le produit final, en % de poids,
[VA] est la teneur en acétate de vinyle copolymérisé dans le produit final en % en poids et
T est la température de polymérisation en °C.

2.  Procédé selon la revendication 1, dans lequel on opère à des températures de 50 à 90°C.

3.  Procédé selon les revendications 1 et 2, dans lequel on maintient la pression minimale définie dans la revendication 1 dans l'intervalle des taux de conversion de 3 à 20%.

4.  Utilisation des copolymères obtenus par le procédé selon les revendications 1 à 3 en tant qu'agents fluidifiants, liants pour adhésifs et composants de mélange pour des matières thermoplastiques, des matières duroplastiques et des caoutchoucs.

5.  Utilisation des copolymères obtenus par le procédé selon les revendications 1 à 3 pour la fabrication de vulcanisats.